Europäisches Patentamt

European Patent Office

Office européen des brevets

(11) Veröffentlichungsnummer: **0 387 561 A2**

# EUROPÄISCHE PATENTANMELDUNG

(21) Anmeldenummer: **90103430.6**

(51) Int. Cl.5: **C09K 19/52**

(22) Anmeldetag: **22.02.90**

(30) Priorität: **16.03.89 DE 3908580**

(43) Veröffentlichungstag der Anmeldung:
**19.09.90 Patentblatt 90/38**

(84) Benannte Vertragsstaaten:
**DE FR GB IT NL**

(71) Anmelder: **Nokia Unterhaltungselektronik
(Deutschland) GmbH
Östliche Karl-Friedrich-Strasse 132
D-7530 Pforzheim(DE)**

(72) Erfinder: **Brosig, Stefan, Dr.
Teckstrasse 51B
D-7000 Stuttgart(DE)**

(54) Flüssigkristallmischung und Flüssigkristallzelle.

(57) Einer Flüssigkristallmischung wird ein Komplexbildner für Metallionen, insbesondere für Natriumionen zugesetzt. Dieser Komplexbildner sorgt dafür, daß Natriumionen, die bei Anwendung der Flüssigkristallmischung in einer Flüssigkristallzelle aus dem Glas der Zellenplatten in die Flüssigkristallschicht eindiffundieren, komplexiert werden, so daß sie nicht zu einem Erhöhen der Leitfähigkeit der Flüssigkristallmischung führen können.

Dadurch ist es nicht mehr erforderlich, Zellenplatten mit Diffusionsschutzschichten oder gar Zellenplatten aus Spezialglas zu verwenden, sondern es kann beliebiges Glas eingesetzt werden.

KOMPLEXBILDNER

METALLIONEN
AUS
ZELLENGLAS

FLÜSSIGKRISTALL-
MISCHUNG
MIT
KOMPLEXBILDNER

→

MISCHUNG
IN
ZELLE

→

FLÜSSIGKRISTALL-
MISCHUNG MIT
KOMPLEXIERTEN
METALLIONEN
IN DER ZELLE

## Flüssigkristallmischung und Flüssigkristallzelle

### TECHNISCHES GEBIET

Die Erfindinng betrifft eine Flüssigkristallmischung, d. h. ein Material, wie es zum Herstellen einer Flüssigkristallzelle geeignet ist. Die Erfindung betrifft weiterhin eine derartige Zelle.

### STAND DER TECHNIK

Außer auf Orientierungs- und/oder Doppelbrechungseffekte von Flüssigkristallmischungen kommt es noch auf andere Eigenschaften dieser Materialien an. So soll z. B. eine Flüssigkristallmischung für eine DSM-Zelle leitfähig sein, während die Flüssigkristallmischung für andere Zellen, insbesondere solche mit Ansteuerung über Dünnfilmtransistoren, möglichst schlecht leiten soll. Interessant im vorliegenden Zusammenhang sind vor allem Flüssigkristallmischungen innd Flüssigkristallzellen, bei denen es auf schlechte elektrische Leitfähigkeit ankommt. Man wählt für derartige Zellen nicht ninr das Flüssigkristallmaterial entsprechend aus, sondern man bemüht sich auch, das Eindringen von Ionen, die die Leitfähigkeit erhöhen, aus dem Glas der Zelle in die Flüssigkristallmischung zu behindern. Es handelt sich hier insbesondere um Natriumionen, deren Eindiffundieren in die Flüssigkristallschicht verhindert werden soll. Der Diffusionsvorgang wird dadurch erschwert, daß eine Sperrschicht auf die Zellenplatte aufgebracht wird, insbesondere eine $SiO_2$-Schicht. Für Zellen, bei denen es auf besonders schlechte Leitfähigkeit der Flüssigkristallmischung ankommt, reicht es jedoch nicht aus, eine solche Sperrschicht anzubringen. Es muß vielmehr ein natriumfreies Glas, insbesondere ein Borsilikat-Glas verwendet werden.

Es besteht somit allgemein das Problem, Flüssigkristallmischungen und Flüssigkristallzellen zu finden, die so beschaffen sind, daß sie auch im Dauerbetrieb nur möglichst geringe elektrische Leitfähigkeit aufweisen.

### DARSTELLUNG DER ERFINDUNG

Erfindungsgemäße Flüssigkristallmischungen weisen einen Zusatz eines Komplexbildners für Metallionen, insbesondere für Natriumionen, auf. Erfindungsgemäße Flüssigkristallzellen beinhalten eine derartige Flüssigkristallmischung mit Komplexbildner.

Gemäß der Erfindung wird also nicht versucht, geringe Leitfähigkeit dadurch aufrechtzuerhalten, daß das Eindiffundieren von Metallionen in die Flüssigkristallschicht erschwert wird, sondern es wird versucht, schlechte Leitfähigkeit dadurch aufrechtzuerhalten, daß in die Schicht eindiffundierte Metallionen daran gehindert werden, die Leitfahigkeit zu erhöhen. Die erfindungsgemäße Maßnahme kann allerdings auch zusammen mit der herkömmlichen Maßnahme der Diffusionsbehinderung verwendet werden, also der Maßnahme des Aufbringens einer Sperrschicht auf die Zellenplatten.

Metallionen, die aus dem Glas der Zellenplatten in die Flüssigkristallschicht eindringen können, sind vor allem die Ionen einwertiger Metalle und hier insbesondere Natriumionen. Zum Komplexieren von Natriumionen werden vorzugsweise Kryptatbildner, insbesondere bicyclische Aminopolyether verwendet.

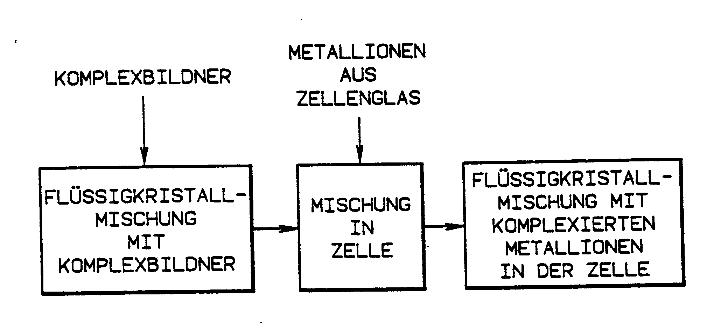

Die Erfindung ist in der beigefügten Figur veranschaulicht. Gemäß dieser Figur wird einem üblichen Flüssigkristall zunächst ein Komplexbildner für Metallionen zugesetzt. Dann wird die Flüssigkristallmischung in eine Flüssigkristallzelle eingebracht. Wenn er in dieser befindlich ist, diffundieren Metallionen aus dem Zellenglas in ihn ein. Dieser Diffusionsprozeß ist langsam, wenn das Zellenglas mit einer Schutzschicht, z. B. einer $SiO_2$-Schicht, bedeckt ist, jedoch schneller, wenn es an einer solchen Schutzschicht fehlt. Die eindiffundierten Metallionen werden komplexiert, so daß schließlich ein Flüssigkristall mit komplexierten Metallionen vorliegt.

Die Komplexbildung ist wie jede physikalisch-chemische Reaktion nicht vollständig. Es stellt sich vielmehr ein Gleichgewicht zwischen komplexierten und nicht komplexierten Metallionen ein. Es können um so mehr Metallionen komplexiert werden, je höher der Zusatz an Komplexbildner zur Flüssigkristallmischinng ist. Vorzugsweise wird daher soviel Komplexbildner wie möglich zugesetzt, jedoch nur soviel, daß das Erreichen gewünschter Schalteigenschaften der Flüssigkristallmischung nicht verhindert wird.

Das Zumischen von Komplexbildner zu einer Flüssigkristallmischung ist bei sämtlichen Anwendungen von Vorteil, wo Leitfähigkeit der Flüssigkristallmischung unerwünscht ist. Geringe Leitfahigkeit ist für Flüssigkristallmischungen für alle Arten von Zellen außer DSM-Zellen erwünscht. Unbedingt erforderlich ist sehr geringe Leitfähigkeit für Zellen mit Dünnfilmtransistor-Ansteuerung. Dies, weil ein leitendes Flüssigkristallmaterial das Entladen der Transistoren wahrend zwei Ansteuervorgängen erheblich beschleunigen würde. Eine Flüssigkristallmischung für derartige Zwecke sind zum Beispiel TFT-Mischungen ZLI-3033 oder ZLI-3270 von Merck. Diese Materialien sind jedoch nur beispielhaft für Hunderte von Flüssigkristallmischungen, die im Handel für eine Vielzahl unterschiedlicher Zellentypen angeboten werden. Entsprechendes wie für Zellen mit Dünnfilmtransistoren gilt für Zellen mit anderen elektronischen Schaltern und Speichern, z.B. MIMs.

Alle Flüssigkristallmischungen sind sehr gute Lösungsmittel, so daß alle Arten bekannter Komplexbildner für einwertige Kationen verwendet werden können. Besonders geeignet sind Chelatbildner (z.B.Kronenether) und Kryptatbildner, insbesondere bicyklische Aminopolyether, speziell Aminopolyether 221 (4,7,- 13, 16, 21-Pentaoxa-1, 10-diazabicyclo-[8,8,5]-tricosan). Von einem derartigen Kryptatbildner werden z. B. 1 - 2 % bezogen auf das Gewicht der Flüssigkristallmischung zugemischt.

Das Verwenden eines Komplexbildnersist jedoch nicht nur zum Aufrechterhalten geringer Leitfähigkeit einer Flüssigkristallmischung von Vorteil, sondern auch aus anderen Gründen, die geringe Mengen frei beweglicher einwertiger Kationen, insbesondere Natriumionen, in der Zelle wünschenswert erscheinen lassen. Z. B. werden Orientierungsschichten aus Polyphenylen durch Natriumionen geschädigt. Diese Natriumionen gelangen aus dem Glas zunächst in die Polyphenylenschicht, so daß der Komplexbildner in der erst dann folgenden Flüssigkristallschicht zwar eine gewissen Schädigung nicht verhindern kann, jedoch das Ausmaß der Schädigung gegenüber dem bisher hervorgerufenen Ausmaß dadurch zurücksetzt, daß er einen Teil der Natriumionen komplexiert, die durch die gesamte Polyphenylenschicht diffundieren.

Das Verwenden einer Flüssigkristallmischung mit zugesetztem Komplexbildner in einer Flüssigkristallzelle hat den Vorteil, daß jedes beliebige billige Zellenglas verwendet werden kann, so daß nicht mehr zwingend auf Zellenplatten aus Spezialglas oder mit einer Diffusionsschutzschicht zugegriffen werden muß, wenn besonders geringe Leitfähigkeit auch für lange Betriebsdauer einer Zelle gefordert ist.

**Ansprüche**

1. Flüssigkristallmischung, **gekennzeichnet durch** einen Zusatz eines Komplexbildners für Metallionen.

2. Flüssigkristallmischung nach Anspruch 1, **gekennzeichnet durch** einen Zusatz eines Komplexbildners für Natriumionen.

3. Flüssigkristallmischung nach Anspruch 1, **dadurch gekennzeichnet**, daß der Komplexbildner ein Kryptatbildner ist.

4. Flüssigkristallmischung nach Anspruch 1, **dadurch gekennzeichnet**, daß die zugesetzte Menge an Komplexbildner möglichst hoch ist, jedoch nur so hoch, daß sie das Erreichen gewünschter Schalteigenschaften der Flüssigkristallmischung nicht verhindert.

5. Flüssigkristallzelle mit einer Flüssigkristallmischung im Inneren der Zelle, **dadurch gekennzeichnet**, daß die Flüssigkristallmischung eine solche gemäß Anspruch 1 ist.

6. Flüssigkristallzelle nach Anspruch 5, **dadurch gekennzeichnet**, daß es eine Zelle mit elektronischen Schaltern und Speichern ist.

7. Flüssigkristallzelle nach Anspruch 5, **dadurch gekennzeichnet**, daß es eine Zelle mit einer Orientierungsschicht ains Polyphenylen ist.

KOMPLEXBILDNER

METALLIONEN
AUS
ZELLENGLAS

```
┌─────────────────────┐      ┌──────────────┐      ┌──────────────────────┐
│  FLÜSSIGKRISTALL-    │      │              │      │  FLÜSSIGKRISTALL-     │
│     MISCHUNG         │ ──▶  │  MISCHUNG    │ ──▶  │   MISCHUNG MIT        │
│       MIT            │      │     IN       │      │  KOMPLEXIERTEN        │
│  KOMPLEXBILDNER      │      │   ZELLE      │      │   METALLIONEN         │
│                      │      │              │      │   IN DER ZELLE        │
└─────────────────────┘      └──────────────┘      └──────────────────────┘
```

S. Brosig-16
8.3.1989